# FASCICULE DE BREVET EUROPEEN

(11) **EP 2 912 291 B1**
(45) Date de publication et mention de la délivrance du brevet: **20.07.2016**
(21) Numéro de dépôt: 13789880.5
(22) Date de dépôt: 24.10.2013
(51) Int. Cl.: F02C 7/32, F16H 57/033

(54) **BOITE D'ENGRENAGES DE PRISE DE MOUVEMENT SUR UNE TURBOMACHINE, COMPOSEE DE CARTER ASSEMBLE**
ZAPFWELLENGETRIEBE AN EINER TURBOMASCHINE AUS EINEM MONTIERTEN GEHÄUSE
POWER TAKE-OFF GEARBOX ON A TURBOMACHINE, CONSISTING OF AN ASSEMBLED HOUSING

(30) Priorité: 26.10.2012 FR 1260242
(43) Date de publication de la demande: 02.09.2015
(73) Titulaire: Hispano Suiza, 92700 Colombes (FR)
(72) Inventeur: PELTIER, Jordane, F-75011 Paris (FR); PRUNERA-USACH, Stéphane, F-92500 Rueil Malmaison (FR)
(74) Mandataire: Brevalex
(86) Numéro de dépôt international: PCT/FR2013/052545
(87) Numéro de publication internationale: WO 2014/064390

(56) Documents cités:
- US-A- 6 142 418
- US-A1- 2004 012 282
- US-A1- 2012 006 137
- US-A1- 2012 117 982
- US-B1- 6 840 479

## Description

Le sujet de l'invention est une boîte d'engrenages de prise de mouvement sur une turbomachine, destinée à transmettre le mouvement originaire de la turbomachine, par l'intermédiaire d'un arbre radial sortant de celle-ci, à divers équipements annexes à la turbomachine, tels que des pompes, des générateurs d'électricité, etc., qui sont indispensables au fonctionnement de la turbomachine ou à d'autres appareils d'un aéronef propulsé par cette turbomachine. Dans l'invention présente, le carter de la boîte est divisé et composé de portions assemblées.

La boîte d'engrenages comprend essentiellement une chaîne cinématique composée de l'ensemble des roues dentées, engrenant entre elles de façon à transmettre le mouvement de l'arbre radial aux équipements, à l'intérieur du carter. Cette chaîne est donc raccordée à l'arbre radial de la turbomachine et à des arbres de prise de mouvement des équipements. La boîte d'engrenages est fixée à la turbomachine à la position voulue et les équipements sont eux-mêmes fixés à la boîte d'engrenages. Un document décrivant une boîte d'engrenages de conception connue est US-A-2012/0006137. On y représente succinctement l'arbre moteur de la turbomachine, l'arbre radial et la boîte d'engrenages proprement dite, comprenant une chaîne cinématique composée de roues dentées à denture droite dans un carter. Un équipement est situé sur la boîte à l'opposé de la fixation à la turbomachine. Tous les axes des roues dentées étant parallèles, la boîte d'engrenages de ce document antérieur comprend une ligne d'engrenages unique.

On appelle ici ligne d'engrenages un ensemble d'engrenages adjacents appartenant à la chaîne cinématique, engrenant en principe entre eux, dont les roues dentées sont situées dans un même plan ou dans des plans parallèles ; en d'autres termes, les axes de rotation des roues dentées sont tous parallèles (perpendiculaires à ce plan ou à ces plans parallèles), et on considère que les roues dentées engrenant directement entre elles s'étendent dans un même plan ; la ligne d'engrenages peut toutefois se poursuivre dans des plans parallèles s'il existe des roues dentées alignées le long d'un même axe de rotation.

La recherche de la diminution de l'encombrement amène l'utilisation préférentielle de boîtes d'engrenages dont la chaîne cinématique comporte plusieurs lignes d'engrenages dans des plans différents, plutôt qu'une ligne d'engrenages unique selon la conception traditionnelle. Ces lignes d'engrenages sont successives et jointes par des engrenages de jonction à axes non parallèles. La forme sinueuse que la chaîne cinématique possède alors lui permet en effet de rester adjacente à la turbomachine sur toute sa longueur, en évitant à la fois les grands encombrements radiaux, axiaux et angulaires inévitables quand une seule ligne d'engrenages est présente et qu'elle doit avoir une certaine longueur, tous ces grands encombrements ayant leurs inconvénients.

Il serait logique, afin de maintenir la réduction de l'encombrement, que le carter de la boîte d'engrenages soit composé de branches logeant chacune une des lignes d'engrenages, ces branches ayant des directions principales d'allongement coïncidant avec celles de leurs lignes d'engrenages, mais le coût de fabrication du carter deviendrait alors élevé, qu'on recoure à la fonderie ou à l'usinage, puisqu'il faudrait soit fabriquer un moule complexe, soit sacrifier une grande quantité de matière, avec des difficultés possibles de moulage ou des temps d'usinage importants. US-B-6840479 divulgue une boîte d'engrenages selon le préambule de la revendication 1.

L'objet fondamental de l'invention est de réduire le coût de fabrication d'un carter de boîte d'engrenages composé de plusieurs branches successives s'allongeant dans des directions différentes, et donc de rendre plus intéressante l'utilisation de boîtes d'engrenages dont la chaîne cinématique est composée de plusieurs lignes d'engrenages.

Il est conforme à l'invention que le carter soit composé de portions distinctes de forme simple correspondant à ses branches, assemblées entre elles aux interfaces de jonction après avoir été fabriquées séparément. Ces portions seront en général de forme simple, rectiligne ou en arc de cercle par exemple, et assez courtes, ce qui donnera un coût de fabrication total moins élevé qu'un carter unitaire, et même qu'un carter d'une boîte traditionnelle à ligne d'engrenages unique, qui est coûteux à fabriquer à cause de sa grande longueur, même si sa forme est simple.

Avantageusement, les interfaces de jonction entre les portions assemblées du carter coïncident avec les interfaces de jonction des lignes d'engrenages (portions engrenantes des engrenages de jonction), de sorte que les extrémités des lignes d'engrenages affleurent aux extrémités des portions de carter avant leur assemblage sans en saillir nettement, ce qui facilite la manutention des portions de la boîte d'engrenages, puis leur assemblage. Cette coïncidence des interfaces de jonction n'est toutefois pas nécessaire. Si elle existe, plusieurs modes de réalisation sont concevables. L'interface de jonction peut ainsi être oblique aux branches, et l'engrenage de jonction est alors composé de roues à denture conique ou droite ; ou bien l'interface de jonction peut être située sur une des faces principales d'une des portions de carter et l'engrenage de jonction sera alors composé de roues à denture droite ou conique.

Certaines réalisations de l'invention seront maintenant décrites au moyen des figures suivantes ; il est clair que d'autres modes de réalisation sont possibles et que cette description est purement illustrative :
- les figures 1, 2, 3 et 4 illustrent une boîte d'engrenages pouvant recevoir l'invention ;
- et les figures 5, 6 et 7, comment l'invention peut être appliquée à cette boîte d'engrenages.

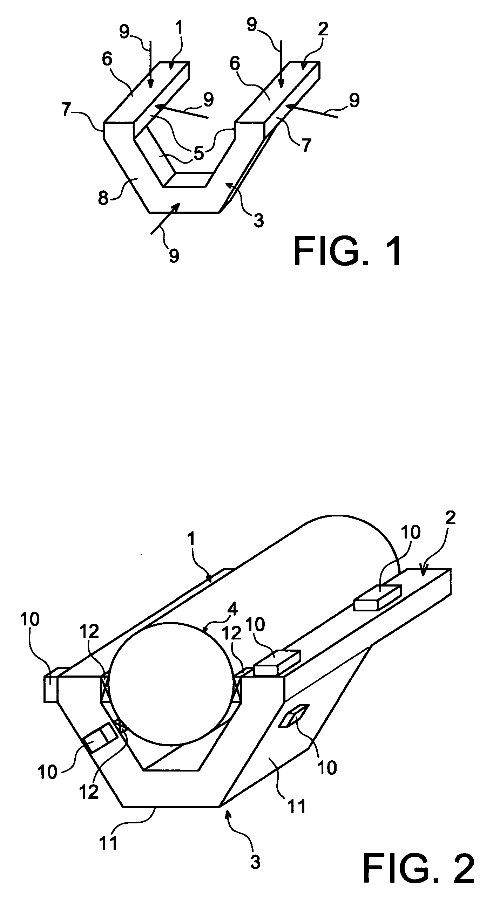

Une réalisation de boîte d'engrenages est décrite au moyen des premières figures 1 à 4. Elle a, d'après la figure 1, une forme tridimensionnelle comprenant un carter extérieur à deux branches extrêmes 1 et 2 parallèles et rectilignes et une branche médiane 3 en portion de cercle reliant les précédentes et qui leur est perpendiculaire. La figure 2 illustre que cette boîte d'engrenages peut être avantageusement placée autour d'une turbomachine 4, par exemple à l'endroit d'un corps à haute pression de celle-ci, en plaçant les branches extrêmes 1 et 2 en direction axiale de ladite turbomachine, à des génératrices diamétralement opposées, la branche médiane 3 côtoyant alors aussi la turbomachine 4 en faisant un demi-tour autour d'elle. La prise de mouvement d'entraînement de la turbomachine peut se faire directement à partir d'un arbre radial classique appartenant à la turbomachine 4, ou par l'intermédiaire d'un arbre intermédiaire appartenant à un boîtier séparé et engrenant avec l'arbre radial. Certaines possibilités de positions de l'arbre d'entraînement (radial ou intermédiaire) sont indiquées par la référence 9 à la figure 1.

Les équipements 10 entraînés par la boîte d'engrenages peuvent être montés eux-mêmes sur des faces supérieures 6, périphériques 7 et frontales 8, ainsi que sur des faces radialement externes 11 de la branche médiane 3. La fixation de la boîte d'engrenages à la turbomachine 4 peut s'effectuer par des boulonnages de points de fixation 12 situés sur le carter 13, en utilisant éventuellement des cales ou d'autres supports intermédiaires entre la turbomachine 4 et, par exemple, certaines des faces internes 5 de la boîte. Les équipements 10 sont fixés au carter 13 par d'autres points de fixation 12.

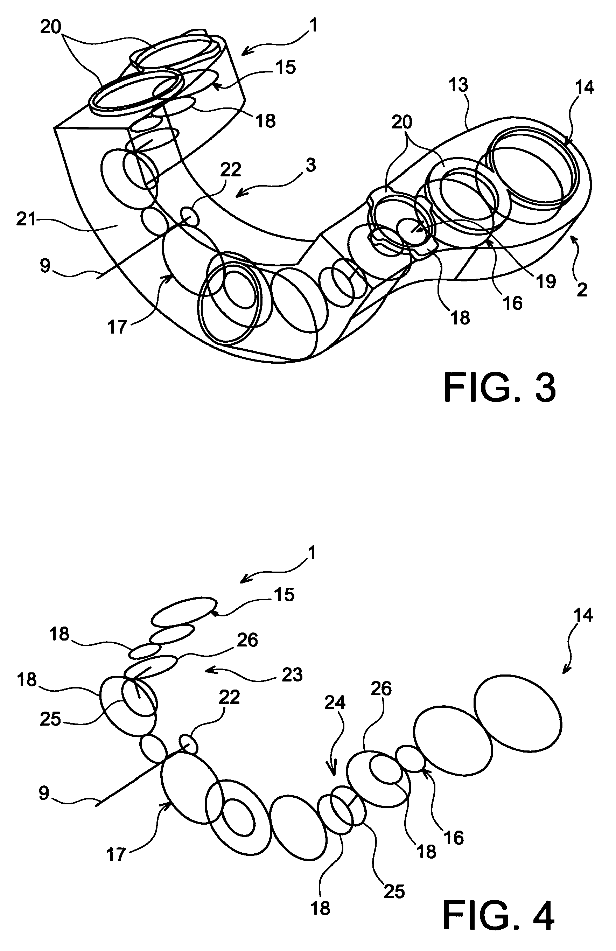

La figure 3 montre que la boîte d'engrenages est composée essentiellement d'un carter 13 définissant le contour des trois branches 1, 2 et 3, et d'une chaîne cinématique 14 contenue dans le carter 13 et dans laquelle on peut distinguer trois lignes d'engrenages 15, 16 et 17, respectivement logées dans une branche 1, 2 et 3 respective. Chacune d'elles comprend des roues dentées 18 généralement à denture droite engrenant entre elles pour former des engrenages droits, les axes 19 de certaines de ces roues dentées 18 étant exploités pour entraîner en rotation les parties mobiles des équipements 10, en traversant des ouvertures 20 du carter 13. Le nombre de roues dentées 18, leurs diamètres et leurs rapports de denture, ainsi que les positions des ouvertures 20 définissant les axes 19 moteurs des équipements 10 peuvent être choisis assez librement, selon les vitesses de rotation qu'on veut transmettre et les positions des équipements 10. Une ouverture particulière 21 est destinée à l'entrée de l'arbre d'entraînement 9, qui comprend encore un pignon d'attaque 22 engrenant avec l'une quelconque des roues dentées 18.

La figure 4 représente la chaîne cinématique 14 en isolé. La liaison entre les trois lignes d'engrenages 15, 16 et 17 se fait par des engrenages de jonction 23 et 24 aux axes non parallèles. Chacun d'eux peut être composé d'un premier pignon conique 25, solidaire et coaxial à une roue dentée 18 d'extrémité de la ligne d'engrenages 17, et d'un second pignon conique 26, de même solidaire et coaxial à une roue dentée 18 d'extrémité d'une des autres lignes d'engrenages 15 ou 16. Les engrenages de jonction 23 et 24 assurent donc la continuité de la chaîne cinématique 14 et la faculté de la mouvoir entièrement par le seul pignon d'attaque 22. Ils permettent aussi d'orienter chacune des lignes d'engrenages 15, 16 et 17 dans la direction de la branche 1, 2 ou 3 du carter 13.

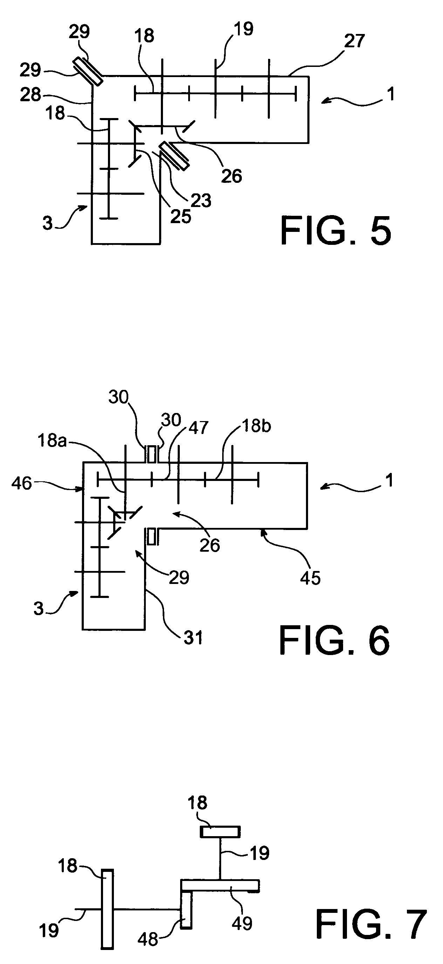

On va maintenant décrire plus en détail les portions coudées de raccordement entre branches du carter 13 dans une boîte d'engrenages tridimensionnelle de forme coudée, conforme à l'invention. Il est possible, ainsi que le montre la figure 5, de placer l'engrenage de jonction 23 (par exemple) juste au coude formé par les deux branches consécutives (1 et 3 ici). Comme il serait dispendieux de construire directement le carter 13, de forme complexe, il est conforme à l'invention de le construire en portions particulières à chacune des branches, ici 27 et 28 pour les branches 1 et 3, qui sont assemblées par des brides boulonnées entre elles, avec l'insertion d'un joint d'étanchéité ou d'une bride intermédiaire si nécessaire.

Dans la réalisation de la figure 5, des brides 29 définissent une interface de jonction entre les portions de carter 27 et 28 qui s'étend dans un plan coupant le coude, c'est-à-dire obliquement aux directions principales d'allongement des branches 1 et 3, et précisément à la diagonale du coude. La jonction des pignons coniques 25 et 26 s'étend alors dans cette interface plane de jonction, de sorte que les pignons coniques 25 et 26 affleurent à l'ouverture des portions de carter 27 et 28 avant leur assemblage, et que, de plus, toutes les roues dentées 18 peuvent avoir des axes 17 parallèles à l'intérieur de chacune des portions de carter 27 et 28, chacune des lignes d'engrenages appartenant à une portion de carter distincte. Ces deux caractéristiques simplifient la conception du carter et l'assemblage de ses portions 27 et 28.

Une autre possibilité avantageuse de réalisation est représentée à la figure 6. L'interface de jonction s'étend ici parallèlement à des faces principales des branches 1 et 3, ici dans le plan d'une face interne 31 de la branche 3, et en remplacement d'une face extrême de la branche 1, cette interface de jonction étant définie par des brides 30 analogues aux précédentes. L'avantage de cette conception est que les formes des portions de carter, ici 45 et 46, sont dépourvues de régions d'extrémité biseautées, et donc qu'elles sont simplifiées. L'avantage présent dans la réalisation précédente, que la chaîne cinématique est divisée en portions dont les extrémités affleurent à l'interface de jonction, peut être sauvegardé si l'engrenage conique de jonction de lignes d'engrenages défini par les pignons coniques 25 et 26 se trouve entièrement dans une des branches, ici 3, et que la chaîne cinématique 14 comprenne un engrenage de jonction appartenant à une des lignes d'engrenages (15 ici) et formé de roues dentées 18 à denture droite, notées ici 18a et 18b, dont la jonction d'engrènement 47 coïncide avec l'interface de jonction 30. Le léger inconvénient de cette conception est que la portion de carter 46 contient une roue dentée (18a) dont l'axe 19 a une direction différente de celle des autres, et donc qu'une légère complication est introduite à cet endroit.

Des dispositions analogues peuvent être également préconisées pour la jonction entre les branches 2 et 3, qui n'a pas été représentée, et, en général, pour tout raccordement de branches de directions différentes, quelle que soit sa forme et notamment l'angle que font les branches, et quel que soit le nombre de branches de la boîte d'engrenages.

Une conception équivalente du point de vue cinématique consisterait à remplacer les pignons coniques 25 et 26 par un pignon droit 48 et une couronne dentée 49 sur un plan, ce que représente la figure 7, sans que d'autres détails de la réalisation soient modifiés.

## Revendications

1. Boîte d'engrenages à fixer à une turbomachine (4) pour entraîner au moins un équipement (10) annexe à la turbomachine, comprenant un carter (13), une chaîne cinématique (14) interne au carter, ainsi qu'un organe de prise de mouvement destiné à engrener avec un arbre de transmission de la turbomachine, le carter comprenant des points de fixation (12) à la turbomachine et à l'équipement, **caractérisée en ce que** la chaîne cinématique est composée d'une pluralité de lignes d'engrenages successives et formant des angles entre elles, le carter (13) comprend au moins deux portions consécutives, assemblées à au moins une interface de jonction, faisant un angle entre elles et contenant chacune une des lignes d'engrenages (15, 16, 17), et lesdites portions (27, 28 ; 45, 46) sont distinctes et assemblées entre elles à l'interface de jonction.

2. Boîte d'engrenages selon la revendication 1, **caractérisée en ce que** l'interface de jonction des portions du carter est oblique aux branches.

3. Boîte d'engrenages selon la revendication 2, **caractérisée en ce que** l'interface de jonction des portions du carter est à une diagonale d'un coude du carter.

4. Boîte d'engrenages selon la revendication 1, **caractérisée en ce que** l'interface de jonction des portions du carter est parallèle à une face principale d'une desdites portions du carter.

5. Boîte d'engrenages selon la revendication 4, **caractérisée en ce que** l'interface de jonction des portions du carter appartient à ladite face principale.

6. Boîte d'engrenages selon l'une quelconque des revendications précédentes, **caractérisée en ce que** la chaîne cinématique comprend un engrenage ayant une jonction d'engrènement (47) qui coïncide avec l'interface de jonction (30) des portions du carter.

7. Boîte d'engrenages selon la revendication 6, **caractérisée en ce que** ledit engrenage est l'engrenage de jonction des deux lignes d'engrenages.

8. Boîte d'engrenages selon la revendication 7 et l'une quelconque des revendications 2 ou 3, **caractérisée en ce que** l'engrenage de jonction des deux lignes d'engrenages est composé de roues dentées à denture conique.

9. Boîte d'engrenages selon la revendication 6 et l'une quelconque des revendications 4 ou 5, **caractérisée en ce que** ledit engrenage est composé de roues dentées à denture droite (18a, 18b).

10. Boîte d'engrenages selon la revendication 1, **caractérisé en ce que** les portions consécutives du carter comprennent au moins une branche rectiligne (1, 2) et une branche en portion de cercle (3) assemblée à la branche rectiligne, les lignes d'engrenages (15, 16, 17) étant chacune composées de roues dentées ayant des axes de rotation tous perpendiculaires à un même plan.

## Patentansprüche

1. Getriebekasten zur Befestigung an einer Turbomaschine (4) zum Antreiben von mindestens einem an der Turbomaschine angeschlossenen Ausrüstungsteil (10), mit einem Gehäuse (13), einer kinematischen Kette (14) innerhalb des Gehäuses sowie einem Zapfwellenorgan, das zum Eingreifen in eine Übertragungswelle der Turbomaschine vorgesehen ist, wobei das Gehäuse Befestigungspunkte (12) an der Turbomaschine und an dem Ausrüstungsteil aufweist, **dadurch gekennzeichnet, dass** die kinematische Kette aus einer Vielzahl von aufeinanderfolgenden Getriebeleitungen besteht, die untereinander Winkel bilden, dass das Gehäuse (13) mindestens zwei aufeinanderfolgende Abschnitte umfasst, die an mindestens einer Verbindungsschnittstelle angefügt sind, untereinander einen Winkel ausbilden und jeweils eine der Getriebeleitungen (15, 16, 17) aufweisen, und dass diese Abschnitte (27, 28; 45, 46) verschieden sind und untereinander an der Verbindungsschnittstelle zusammengefügt sind.

2. Getriebekasten nach Anspruch 1, **dadurch gekennzeichnet, dass** die Verbindungsschnittstelle der Abschnitte des Gehäuses zu den Armen schräg ausgeführt ist.

3. Getriebekasten nach Anspruch 2, **dadurch gekennzeichnet, dass** die Verbindungsschnittstelle der Abschnitte des Gehäuses diagonal zu einer Biegung des Gehäuses angeordnet ist.

4. Getriebekasten nach Anspruch 1, **dadurch gekennzeichnet, dass** die Verbindungsschnittstelle der Abschnitte des Gehäuses parallel zu einer Hauptfläche von einem dieser Abschnitte des Gehäuses angeordnet ist.

5. Getriebekasten nach Anspruch 4, **dadurch gekennzeichnet, dass** die Verbindungsschnittstelle der Abschnitte des Gehäuses zu dieser Hauptfläche gehört.

6. Getriebekasten nach einem der vorhergehenden Ansprüche, **dadurch gekennzeichnet, dass** die kinematische Kette ein Getriebe mit einer Eingriffsverbindung (47) umfasst, die der Verbindungsschnittstelle (30) der Abschnitte des Gehäuses entspricht.

7. Getriebekasten nach Anspruch 6, **dadurch gekennzeichnet, dass** das Getriebe ein Verbindungsgetriebe der beiden Getriebeleitungen ist.

8. Getriebekasten nach Anspruch 7 und einem der Ansprüche 2 oder 3, **dadurch gekennzeichnet, dass** das Verbindungsgetriebe der beiden Getriebeleitungen aus Zahnrädern mit konischer Zahnung besteht.

9. Getriebekasten nach Anspruch 6 und einem der Ansprüche 4 oder 5, **dadurch gekennzeichnet, dass** das Getriebe aus Zahnrädern mit gerader Zahnung (18a, 18b) besteht.

10. Getriebekasten nach Anspruch 1, **dadurch gekennzeichnet, dass** die aufeinanderfolgenden Abschnitte des Gehäuses zumindest einen geradlinigen Arm (1, 2) und einen Arm in Form eines Kreisabschnittes (3) umfassen, der mit dem geradlinigen Strang verbunden ist, wobei die Getriebeleitungen (15, 16, 17) jeweils aus Zahnrädern mit Drehachsen bestehen, die alle senkrecht zu einer Ebene angeordnet sind.

## Claims

1. A gearbox to be attached to a turbomachine (4) for driving at least one piece of equipment (10) related to the turbomachine, comprising a housing (13), a drive chain (14) internal to the housing, as well as a power take-off member for meshing with a transmission shaft of the turbomachine, the housing comprising attachment points (12) to the turbomachine and the piece of equipment, **characterized in that** the drive chain consists of a plurality of successive gear lines and forming angles to each other, the housing (13) comprises at least two consecutive portions, assembled at at least one junction interface, forming an angle to each other and each containing one of the gear lines (15, 16, 17), and said portions (27, 28; 45, 46) are distinct and assembled to each other at the junction interface.

2. The gearbox according to claim 1, **characterized in that** the junction interface of the housing portions is oblique to the branches.

3. The gearbox according to claim 2, **characterized in that** the junction interface of the housing portions is at a diagonal of a bend of the housing.

4. The gearbox according to claim 1, **characterized in that** the junction interface of the housing portions is parallel to a main face of one of said housing portions.

5. The gearbox according to claim 4, **characterized in that** the junction interface of the housing portions belongs to said main face.

6. The gearbox according to any of the preceding claims, **characterized in that** the drive chain comprises a gear having a meshing junction (47) which coincides with the junction interface (30) of the housing portions.

7. The gearbox according to claim 6, **characterized in that** said gear is the junction gear of both gear lines.

8. The gearbox according to claim 7 and any of claims 2 or 3, **characterized in that** the junction gear of both gear lines consists of bevel wheels.

9. The gearbox according to claim 6 and any of claims 4 or 5, **characterized in that** said gear consists of spur wheels (18a, 18b).

10. The gearbox according to claim 1, **characterized in that** the consecutive housing portions comprise at least one rectilinear branch (1, 2) and a partly circular branch (3) assembled to the rectilinear branch, the gear lines (15, 16, 17) each consisting of toothed wheels having axes of rotation all perpendicular to a same plane.
